# EUROPÄISCHE PATENTSCHRIFT

(11) **EP 0 360 007 B1**
(45) Veröffentlichungstag und Bekanntmachung des Hinweises auf die Patenterteilung: **14.09.1994**
(21) Anmeldenummer: 89115256.3
(22) Anmeldetag: 18.08.1989
(51) Int. Cl.: C12C 5/00, C12C 1/18, C12G 3/02, C12C 11/04

(54) **Bier mit Roggenaroma und Verfahren zu seiner Herstellung**
Beer with rye-aroma and process for manufacturing the same
Bière avec arôme de seigle et son procédé de fabrication

(30) Priorität: 25.08.1988 DE 3828786
(43) Veröffentlichungstag der Anmeldung: 28.03.1990
(73) Patentinhaber: FÜRSTLICHE BRAUEREI THURN UND TAXIS REGENSBURG GMBH, D-93053 Regensburg (DE)
(72) Erfinder: Schifferl, Ludwig, Dipl.-Braumeister, D-8411 Sinzing (DE); Hopfensitz, Hans-Georg, D-7085 Bopfingen (DE); Stippler, Kurt, Dr., D-8051 Marzling (DE)
(74) Vertreter: Beetz & Partner Patentanwälte

(56) Entgegenhaltungen:
- DE-A- 1 517 804
- DE-A- 1 517 864
- FR-A- 1 036 824
- GB-A- 1 124 394
- CHEMICAL ABSTRACTS, Band 79, 1973, Columbus, OH (US); Seite 249, Nr. 51830j#
- CHEMICAL ABSTRACTS, Band 74, 1971, Columbus, OH (US); B. MAENDL et al., Seite 355, Nr. 98144a#

## Beschreibung

Die Erfindung betrifft ein neuartiges Bier, das unter teilweiser oder ausschließlicher Verwendung von Roggen als Stärkequelle oder unter Verwendung einer roggenarmen oder roggenfreien Stärkequelle und Aromatisierung mit Roggenaroma bzw. Roggenbrotaroma hergestellt ist und sich je nach den speziellen Herstellungsbedingungen durch einen mehr oder weniger stark ausgeprägten roggenbrotartigen Geruch und Geschmack auszeichnet, sowie Verfahren zu seiner Herstellung.

Als Biere werden alle Getränke bezeichnet, die aus stärkehaltigen Substanzen durch alkoholische Gärung gewonnen sind. In der Bundesrepublik Deutschland müssen untergärige Biere nach dem Biersteuergesetz aus Gerstenmalz, Hopfen und Wasser hergestellt sein (Reinheitsgebot), während für obergärige Biere auch andere Malzarten, Zucker und aus Zucker hergestellte Farbmittel verwendet werden dürfen.

Unter Malz wird ferner alles künstlich zum Keimen gebrachte Getreide verstanden.

Die herkömmliche Bierherstellung läßt sich in drei große Abschnitte aufgliedern, nämlich die Malzbereitung, d.h. Quellen, Keimen und Darren des Getreides, die Herstellung der Würze aus dem erhaltenen Malz durch Maischen, Abtrennen der Treber und Kochen sowie die anschließende Vergärung.

Der Schritt der Malzbereitung ist erforderlich, da die stärkehaltige Ausgangssubstanz nicht direkt vergoren werden kann, sondern zuvor "verzuckert" werden muß. Dazu werden hydrolytisch wirkende Enzyme (Amylasen, Maltasen, Glucosidasen etc.) aus dem keimenden Getreide herangezogen, welche die Stärke in nicht vergärbare Dextrine und vergärbare Maltose überführen. Zur Malzbereitung wird das Getreide zunächst geweicht, worauf sich dann die Keimung anschließt, die bis zu einer bestimmten Länge des Blattkeims durchgeführt wird. Anschließend wird die Keimung unterbrochen und das erhaltene Grünmalz gedarrt, d.h. unter Erwärmung getrocknet. Beim Darrprozeß sterben die Getreidekörner ab. Aus Eiweiß und Kohlenhydraten werden, insbesondere bei höheren Temperaturen, durch Maillard-Reaktion Röst- und Aromastoffe gebildet, die dem Darrmalz seinen typischen süßen Geruch und Geschmack und eine je nach der Abdarrtemperatur helle oder dunkle Farbe verleihen.

Bei der Würzebereitung wird das geschrotete Malz gemaischt, d.h. mit Wasser angerührt. Beim Maischen wird die im Malz enthaltene Stärke durch die arteigenen Amylasen vollständig zu Zucker und Dextrin en abgebaut und damit in eine lösliche Form gebracht. Da das Temperaturoptimum der Maltosebildung bei 50 bis 65 °C liegt, das Temperaturoptimum der Dextrinbildung jedoch bei etwa 70 °C, kann durch geeignete Temperaturwahl die Art des Stärkeabbaus weitgehend kontrolliert werden. Maischen für helle Biere werden längere Zeit auf 55 bis 68° gehalten, während Maischen für dunkle Biere, die mehr Dextrine enthalten, rascher über die Verzuckerungstemperatur gebracht werden. Die von den Trebern durch Absetzenlassen bzw. Filtration abgeläuterte Würze wird zur Aufkonzentrierung, Sterilisation und Koagulation löslicher Proteine sowie zur Inaktivierung der Enzyme gekocht und zur Aromatisierung und Konservierung mit Hopfen bzw. Hopfenextrakt versetzt. Die gehopfte Würze wird danach abgekühlt und durch Sedimentation, Zentrifugieren, Filtration oder Flotation von koaguliertem Eiweiß und Hopfenrückständen befreit; bei der anschließenden Vergärung mit zugesetzter Hefe werden nur die Zucker, nicht aber die im Bier erwünschten Dextrine abgebaut.

Die Vergärung (Hauptgärung) wird durch Zusatz der sogenannten Anstellhefe eingeleitet, wobei für obergärige Biere obergärige Hefen (Oberhefen) verwendet werden, die unter Aufsteigen zur Oberfläche eine lebhafte Gärung bewirken, während für untergärige Biere untergärige Hefen (Unterhefen) eingesetzt werden, die eine vergleichsweise langsame Gärung bewirken und sich als Bodensatz absetzen.

Zur Nachgärung wird im allgemeinen Speise, d.h. unvergorene Bierwürze, zugesetzt.

Anstelle von Malz können auch ungemalzte Gerste, die mit Enzympräparaten versetzt ist (vgl. Dechema-Monographie 70 (1972) 231-246), oder auch nicht aus Getreide stammende Stärkequellen zur Bierherstellung herangezogen werden.

Neben Gerstenmalz wird, insbesondere für obergärige Biere, auch Weizenmalz verwendet.

In der Monographie von A. Maurizio "Geschichte der gegorenen Getränke", Verlag Dr. Martin Sändig oHG, Wiesbaden, 1970, ist auf Seite 105 als Biergetreide des Mittelalters auch Roggen genannt, ohne daß allerdings hierzu nähere Angaben gemacht sind.

Der sog. Brotkwaß ist ferner als ein russisches Nationalgetränk bekannt (W. W. Rudolf, Die Lebensmittel-Industrie 16 (1969), Heft 4, Seiten 133-135). Der Brotkwaß wird durch eine unterbrochene Milchsäuregärung und alkoholische Gärung der Extraktivstoffe einer Maische erhalten, die aus Brotstücken mit und ohne Malzzusatz und Zucker oder unmittelbar aus einem Gemisch von Roggenmalz, Gerstenmalz und Roggenmehl hergestellt wird. Hierbei können auch cytolytische Enzyme eingesetzt werden, wie aus DE-A-15 17 864 und GB-A-11 21 394 bekannt ist. Die Kwaßbrote werden speziell zu diesem Zweck aus einem Gemisch von Roggenmehl, Gerstenmalz und Roggenvollkornmehl gebacken. Die Maischeherstellung geschieht durch Auszug der Extraktivstoffe aus den Kwaßbroten mit heißem Wasser und Abtrennung der unlöslichen Bestandteile. Die Vergärung der Maische erfolgt nach Zusatz von Hefe und Milchsäurebakterien und Zucker. Zur Erzeugung des typischen Brotaromas werden Roggenmalz und Roggenmehl vor dem Maischen gebrannt. Aufgrund der sehr speziellen Ausgangsmaterialien und der besonderen Herstellungsweise sowie der resultierenden Produkteigenschaften ist die Kwaßerzeugung nicht mit der Bierherstellung zu vergleichen.

Aus DE 15 17 804 war ferner ein Zusatzstoff zum Bierbrauen bekannt, der aus einem Getreide einschließlich Roggen dadurch hergestellt wird, daß die Körner zunächst in Wasser geweicht und anschließend in einem Kocher bei 93 bis 105 °C wärmebehandelt werden, um die Stärke zu gelatinieren, die Enzyme zu zerstören und flüchtige Aromen zu verdampfen. Nach Trocknung bei 43 bis 105 °C und eventueller Konditionierung bei 77 bis 99 °C kann der Zusatzstoff gelagert und beim Bierbrauen eingesetzt werden, um damit einen Teil des Malzes und anderer Zusatzstoffe zu ersetzen.

Eine Aromatisierung von Bier nach der Hauptgärung ist im Stand der Technik nicht beschrieben worden.

Der Erfindung liegt die Aufgabe zugrunde, ein neuartiges Bier, das unter teilweiser oder ausschließlicher Verwendung von Roggen als Stärkequelle oder unter ausschließlicher Verwendung eines von Roggen verschiedenen Getreides oder einer roggenfreien Getreidemischung als Stärkequelle, deren Aufschluß nicht notwendig durch im Korn vorliegende Enzyme vorgenommen wird, oder einer nicht auf einem Getreide beruhenden Stärkequelle hergestellt ist und das Roggenaroma bzw. Roggenbrotaroma aufweist, sowie Verfahren zu seiner Herstellung anzugeben.

Die Aufgabe wird gemäß den unabhängigen Ansprüchen gelöst. Die abhängigen Ansprüche betreffen vorteilhafte Ausführungsformen.

Die vorliegende Erfindung geht von der Überlegung aus, daß ein Bier mit aus Roggen stammenden Aromastoffen nicht nur zu einer Bereicherung des Angebots an Biersorten führen würde, sondern einen besonders typischen aromatischen, würzigen und kernigen Geschmack erwarten lassen sollte. Durch im Rahmen der Erfindung vorgenommene Untersuchungen wurde allerdings unerwarteterweise festgestellt, daß eine wirtschaftliche Herstellung solcher Biere unter ausschließlicher oder mengenanteilsmäßig überwiegender Verwendung von Roggen als Stärkequelle nach herkömmlichen Mälz- und Darrverfahren nicht möglich ist, da unter den herkömmlicherweise angewandten Bedingungen Roggen wesentlich schlechter aufgeschlossen wird als beispielsweise Gerste oder Weizen und die auftretende, bis zu etwa dreifach höhere Viskosität entsprechender Würzen nicht einmal die Anwendung herkömmlicher Läuterverfahren erlaubt, sowie, daß ein roggenspezifischer, roggenbrotartiger Geruch und Geschmack unter Anwendung der herkömmlichen Mälz- und Braumethodik nicht zu erzielen sind.

In umfangreichen Untersuchungen wurde, trozt der aufgrund der obigen Befunde negativen fachmännischen Erwartungshaltungen, festgestellt, daß durch spezifisch auf die Verwendung von Roggen als Stärkequelle abgestellte Verfahrensmaßnahmen ein "Roggenbier" erhältlich ist, das auch dann, wenn als Stärkequelle nicht ausschließlich Roggen eingesetzt wird, bereits einen roggenspezifischen, neuartigen Geruch und Geschmack aufweist, wobei der Aufschluß des Korns durch korneigene und/oder zugesetzte Hydrolasen und Proteasen erfolgen kann. Es kann aber auch ein ausschließlich unter Verwendung einer von Roggen verschiedenen Stärkequelle hergestelltes Bier erfindungsgemäß eingesetzt werden. Das Prinzip des erfindungsgemäßen Verfahrens zur Herstellung von Bier beruht darauf, daß ein Bier nach der Hauptgärung mit Roggenaroma bzw. Roggenbrotaroma oder deren wesentlichen Bestandteilen bzw. diese Aromen enthaltenden Mischungen aromatisiert wird. Eine vorteilhafte Ausführungsform des Verfahrens beruht darauf, daß zur Würzeherstellung entweder ausschließlich Roggenmalz oder eine Malzmischung, die mindestens 10 Masse-% und vorzugsweise mindestens 50 Masse-% Roggenmalz enthält, oder eine zerkleinerte, ungemälzte Stärkequelle, die hydrolytisch und proteolytisch wirksame Enzyme enthält, verwendet wird, die entweder ganz aus Roggen oder ausschließlich aus einer Getreidemischung besteht, die mindestens 10 Masse-% und vorzugweise mindestens 50 Masse-% Roggen enthält. Alternativ dazu können als Stärkequelle auch ein von Roggen verschiedenes Getreide oder eine roggenfreie Getreidemischung oder auch eine nicht auf einem Getreide beruhende Stärkequelle, beispielsweise auf der Basis von Kartoffeln, Erbsen etc. verwendet werden.

Wenn eine Stärkequelle verwendet wird, die per se keine Proteine oder Aminosäuren enthält, werden Proteine und/oder Aminosäuren zugesetzt. Falls die Stärkequelle keine Proteasen bzw. Hydrolasen enthält, werden diese Enzyme ebenfalls zugesezt, um den Aufschluß durch Maischen zu ermöglichen. Auch eine entsprechende Aromatisierung herkömmlicher Biere mit Roggenbrotaroma bzw. geschmacksspezifischen Substanzen ist erfindungsgemäß vorgesehen.

Unter Roggenaroma bzw. Roggenbrotaroma werden im weitesten Sinne die Substanzen verstanden, die einzeln oder in Kombination diese typischen Aromaeindrücke hervorrufen, wobei diese sowohl in isolierter, reiner bzw. gereinigter Form als auch in Form von Extrakten aus Malzen, Maischen, Würzen oder Bieren auf Roggenbasis vorliegen können, ferner in Form von beim Sud von Bier auf Roggenbasis anfallenden Brüdenkondensaten oder Fraktionen davon.

Da die unter Verwendung von Roggen in der Würze resultierenden, roggentypischen Aromastoffe in organoleptischer Hinsicht bereits in ausreichender Menge vorliegen, wenn als Getreide nicht ausschließlich Roggen eingesetzt wird, kann ein typischer roggenbrotartiger Geruch und Geschmack auch bereits bei nicht vollständig aus Roggen bestehenden stärkehaltigen Ausgangsmaterialien erzielt werden, wenn dafür gesorgt wird, daß insbesondere bei der Maischebereitung und der Vergärung zu einem Aromaverlust oder zu einer Aromaveränderung führende Abbaureaktionen bzw. eine Aromaüberdeckung durch Gärungsnebenprodukte verhindert wird. Darüber hinaus wird gemäß der Erfindung zusätzlich eine Aromatisierung mit Roggen- bzw. Roggenbrotaroma vorgenommen.

Durch die Aromatisierung eines fertigen Biers mit einem oder mehreren roggenspezifischen Aromastoffen werden neuartige Wege zu Bieren mit typischem Roggenbrotaroma eröffnet, die aus praktisch beliebigen Stärkequellen erhältlich sind.

Erfindungsgemäß werden vorzugsweise Malze bzw. Malzmischungen eingesetzt, die neben dem Roggenmalz aus Weizenmalz und/oder Gerstenmalz bestehen, wobei eine Kombination von Roggenmalz mit 5 bis 15 und insbesondere 10 Masse-% Weizenmalz und 35 bis 45 und insbesondere 40 Masse-% Gerstenmalz bereits günstige Ergebnisse liefert. Analoges gilt für die Verwendung einer ungemälzten Stärkequelle auf Getreidebasis, deren nicht aus Roggen bestehender Getreideanteil aus 5 bis 15 und insbesondere 10 Masse-% Weizen und 35 bis 45 und insbesondere 40 Masse-% Gerste besteht.

Im Rahmen der Erfindung können günstig auch reines Roggenmalz bzw. ausschließlich ungemalzter Roggen als Stärkequelle eingesetzt werden jedoch ist die ausschließliche Verwendung von Roggen als Stärkequelle zur Erzielung eines roggentypischen Biergeschmacks, wie oben erläutert, nicht zwingend erforderlich.

Eine Aromaintensivierung kann auch dadurch erzielt werden, daß zur Würzeherstellung ein Roggenmalz eingesetzt wird, das teilweise oder ganz aus Roggenfarbmalz bzw. Roggen-Karamelmalz besteht, da diese Produkte, die unter Verwendung von Roggen in an sich bekannter Weise herstellbar sind, aufgrund der angewandten höheren Temperaturen höhere Anteile an roggenspezifischen Aromastoffen aufweisen, die durch geeignete Verfahrensführung beim Maischen und der Vergärung einschließlich der Nachgärung erhalten bleiben.

Im Rahmen der Erfindung ergab sich ferner überraschenderweise, daß eine hohe Aufschließung von Roggen erzielbar ist, wenn in völliger Umkehrung der derzeit bei von Roggen verschiedenen Getreiden angewandten Malztechnologie während der Mälzung die Keimgutfeuchte fortschreitend verringert, die Temperatur jedoch fortschreitend erhöht wird. Durch diese Umkehrung der bisher angewandten Verfahrensweise, bei der man den Wassergehalt des Keimguts steigert und die Temperaturen verringert, wird eine Überlösung des Roggens zurückgedrängt, ohne daß ein entsprechender Aromaverlust auftritt, wobei zugleich die Viskosität der daraus gewonnenen Würzen niedrig genug ist, um herkömmliche Läuterverfahren im Läuterbottich zuzulassen. Diese Art der Malzbereitung wirkt sich somit positiv auf die Viskosität entsprechender Würzen aus.

Nach einer erfindungsgemäß besonders bevorzugten Verfahrensweise wird zur Würzebereitung eingesetztes Roggenmalz hergestellt durch Weichen von Roggen mit Wasser von etwa 12 °C bis zu einem Wassergehalt von etwa 43 bis 45 Masse-%, Keimung des Roggens unter Einstellung einer Temperatur von 16 ± 3 °C und Steigerung der Temperatur während der Keimung auf 22 ± 3 °C und Verringerung des Wassergehalts während der Keimung auf ≦ 40 Masse-% sowie anschließendes Darren des erhaltenen Roggen-Grünmalzes. Nach einer günstigen Ausführungsform dieser Verfahrensweise wird ein Anfangs-Wassergehalt des Roggens von etwa 43 % eingestellt, der auf 40 % abgesenkt wird; die Temperatur wird andererseits bei dieser günstigen Variante auf 13 °C eingestellt und im Verlauf der Keimung auf 19 °C erhöht.

Dabei ist besonders günstig, wenn die Temperatur während der Keimung mit einer Rate von etwa 0,5 bis 2 °C/d und vorzugsweise etwa 1 °C/d gesteigert wird.

Die fortschreitende Verringerung des Wassergehalts des Keimguts während der Keimung kann andererseits kontinuierlich oder stufenweise in etwa gleichen Stufen erfolgen, vorzugsweise mit einer Rate von etwa 0,5 bis 1,0 Masse-%/d.

Eine besonders günstige Erzeugung von Roggenaroma erfolgt, wenn nach Beendigung der Keimung und vor dem Darren das Roggen-Grünmalz auf etwa 40 °C erwärmt und einige Stunden bis maximal 1 d auf dieser Temperatur gehalten wird.

Ebenfalls aromaverstärkend wirkt sich die Maßnahme aus, die Temperatur am Ende des Darrprozesses auf etwa 105 bis 150 und vorzugsweise 120 bis 150 °C zu steigern und diese Temperatur einige Stunden, vorzugsweise drei bis fünf Stunden, aufrechtzuerhalten. Je höher die in diesem Bereich gewählte Abdarrtemperatur ist, desto intensiver wird gleichzeitig die Färbung des resultierenden Malzes.

In gleichem Sinne wirkt sich auch die Maßnahme aus, zu Beginn des Darrens, vorzugsweise auf der Darre, eine Temperatur von 40 ± 5 °C einzustellen und diese Temperatur ohne Trocknung des Roggen-Grünmalzes einige Stunden zu halten, was beispielsweise dadurch erfolgen kann, daß die Darre nur mit Umluft und ohne Zuführung von Frischluft betrieben wird.

In analoger Weise kann auch bei Verwendung einer ungemälzten Stärkequelle, die wenigstens teilweise aus Roggen besteht, eine Aromaverstärkung erzielt werden, wenn dieses Material, das Proteine und Proteasen und/oder Aminosäuren und ggfs. Zucker und Hydrolasen enthält, vor dem Maischen einer Wärmebehandlung im Bereich von 40 bis 50 °C und ggfs. anschließend bei 105 bis 150 °C während einiger Stunden unterzogen wird, da auch hierbei Reaktionen ablaufen, die zu den angestrebten Aromastoffen führen. Auch bei roggenfreien Stärkequellen kann eine entsprechende Aromatisierung erzielt werden, wenn die Stärkequelle mit bestimmten Zuckern und Hydrolasen sowie bestimmten Aminosäuren versetzt und einer analogen Wärmebehandlung unterzogen wird, die zu einer bevorzugten Bildung von roggenbrottypischen Aromastoffen, insbesondere aus der Pyrazinreihe, führen.

Diese Maßnahmen dienen entsprechend erfindungsgemäß nicht nur der Einstellung einer bestimmten gewünschten Färbung des Malzes und damit auch des resultierenden Biers, sondern insbesondere auch der Voraromatisierung.

Wenn ein ungemälztes Getreidegemisch als Stärkequelle, ggfs. mit zugesetzten Hydrolasen und Proteasen, verwendet wird, kann nach einer vorteilhaften Weiterbildung so verfahren werden, daß nur der Roggenanteil davon der Wärmebehandlung unterzogen wird, nicht aber der Rest, z.B. ein entsprechend vorhandener Weizen- bzw. Gersteanteil.

Das erfindungsgemäße Verfahren zur Bierherstellung kann im Prinzip unter Anwendung der üblichen Maischverfahren durchgeführt werden, insbesondere unter Anwendung vom Zweimaisch- bzw. Dreimaischverfahren. Nach dem Zweimaischverfahren (vgl. L. Narziss, Die Technologie der Würzebereitung, Ferd. Enke Verlag Stuttgart, 6. Aufl. 1985, S. 168-171) wird z.B. bei ca. 50 °C von der Hauptmaische, die auf dieser Temperatur für längere Zeit verbleibt, eine erste Teilmaische zur Kochung abgetrennt. Zur Bildung von Zucker und damit auch für einen entsprechenden Alkoholgehalt des Biers wird bei der Erwärmung der ersten Teilmaische noch jeweils bei ca. 64 °C und 72 °C für ca. 10 min eine Temperaturrast, d.h. eine Unterbrechung der Erwärmung, vorgenommen. Nach der Kochung der ersten Teilmaische erfolgt wieder eine Vermischung mit der Hauptmaische bei 64 °C, wonach eine zweite Teilmaische zum erneuten Kochen abgezogen wird, während die Hauptmaische so lange auf der Mischungstemperatur gehalten wird, bis das Wiedereinmischen der zweiten Teilmaische zum Schluß eine Temperatur von ca. 72 °C ergibt.

In überraschender Weise ergab sich im Rahmen der Erfindung bei der Herstellung von Roggenwürze, daß durch folgendes Zweimaischverfahren präexistierende Enzyme und Phosphate optimal in Lösung gebracht werden können, wobei zugleich keine unerwünscht hohe Viskosität der erhaltenen Roggenwürze resultiert:
- Einmaischen bei einer Temperatur im Bereich von 30 bis 40 °C,
- Halten der Maische auf dieser Temperatur,
- Abziehen der ersten Teilmaische bei dieser Temperatur,
- Halten der ersten Hauptmaische auf dieser Temperatur,
- Zumischen der ersten Teilmaische nach dem Kochen zur ersten Hauptmaische unter Erzielung einer Temperatur der Gesamtmaische von 50 bis 55 °C,
- Abziehen der zweiten Teilmaische,
- Halten der zweiten Hauptmaische auf dieser Temperatur für 20 bis 40 min,
- Erwärmen der zweiten Hauptmaische auf eine Temperatur im Bereich von 60 bis 65 °C und Halten auf dieser Temperatur für 20 bis 40 min
   sowie
- Zumischen der zweiten Teilmaische nach dem Kochen zur zweiten Hauptmaische unter Erzielung einer Temperatur der Gesamtmaische von 70 bis 80 °C.

Erfindungsgemäß wird bei dieser Ausführungsform die erste Temperaturrast bereits im Bereich von 30 bis 40 °C und vorzugsweise etwa 35 °C, d.h. bei der Einmaischtemperatur, durchgeführt, wobei die erste Hauptmaische bis zum Zusammenmischen mit der ersten Teilmaische, nachdem diese gekocht wurde, auf diesem Temperaturniveau verbleibt.

Im Unterschied zu den bekannten Verfahren, bei denen die Hauptmaische nach dem Zusammenmischen mit der ersten Teilmaische auf einer Temperatur von etwa 64 °C verbleibt, wird erfindungsgemäß die Hauptmaische demgegenüber für längere Zeit auf einer niedrigeren Temperatur im Bereich von etwa 50 bis 55 °C gehalten und erst dann weiter aufgeheizt. Hierdurch wird ein zu weitgehender Abbau der Schaumbildner verhindert. Auch diese Maßnahme wirkt sich sehr positiv auf den Aufschluß und den Abbau der sonst resultierenden hohen Viskosität aus. Insbesondere können dabei auch Gummistoffe besser entfernt werden, die sich vor allem im Temperaturbereich um 50 °C auflösen.

Bei dem oben erläuterten speziellen Zweimaischverfahren ist es ferner besonders vorteilhaft, eine Temperaturrast der ersten Teilmaische von mehreren Minuten bei Erreichen von etwa 50 °C sowie bei Erreichen von etwa 70 °C, vorzugsweise jeweils etwa 10 min, durchzuführen, wodurch die oben genannten Effekte noch verstärkt werden.

Im Vergleich zu den bekannten Maischverfahren ist somit das erfindungsgemäße Verfahren temperaturmäßig gewissermaßen phasenverschoben.

Bei dieser erfindungsgemäßen Verfahrensweise beim Maischen werden folglich im Unterschied zu den bekannten Maischverfahren die Temperaturen im Bereich um 60 °C rasch durchlaufen, während die bei Temperaturen um 50 bzw. 70 °C ablaufenden Reaktionen stärker gefördert werden. Die Temperaturrast bei 50 °C ist insbesondere auch für den Eiweißabbau wichtig, während die Temperaturrast bei 70 °C für die Bildung der Zucker wesentlich ist. Bei dieser Temperatur entstehen nämlich beim Roggenmalz schwer vergärbare Zucker, wodurch der erzielbare Vergärungsgrad niedriger wird. Bei Temperaturen im Bereich um 60 °C resultiert andererseits ein höherer Zuckergehalt, der einen höheren Vergärungsgrad und damit auch mehr Alkohol ergeben würde. Bei diesem erfindungsgemässen Mischverfahren erzeugt man somit weniger vergärbare Zucker
Durch die vorstehend erläuterten erfindungsgemäßen Maßnahmen läßt sich das Roggenmalz bzw. das Malz auf Roggenbasis im wesentlichen in gleicher Weise wie Gerstenmalz behandeln und verarbeiten.

Durch die oben erläuterten erfindungsgemäßen Maßnahmen beim Mälzen und Maischen resultiert eine ausreichend niedrige Viskosität, um die Würze beispielsweise mit herkömmlichen Läuterbottichen läutern zu können. Es ist jedoch erfindungsgemäß nicht zwingend erforderlich, die beschriebenen Mälz- bzw. Maischbedingungen einzuhalten, wenn eine höhere Viskosität der Würze in Kauf genommen werden kann, beispielsweise bei Läuterung durch Filtration, insbesondere durch Drehfilter, oder Zentrifugieren.

Unabhängig von dem in der Bundesrepublik Deutschland derzeit in Form des Biersteuergesetzes noch geltenden Reinheitsgebot, wonach bei Verwendung anderer Stärkequellen als Gerste die Hauptgärung nur mit obergärigen Hefen durchgeführt werden darf, kann das erfindungsgemäße Bier unter Verwendung von obergärigen wie auch von untergärigen Hefen oder durch Vornahme einer ersten Vergärung mit einer obergärigen Hefe und einer anschließenden Vergärung mit einer untergärigen Hefe oder auch umgekehrt durchgeführt werden. Bei Verwendung obergäriger Hefen wurde festgestellt, daß zuvor vorhandenes roggentypisches Aroma, wahrscheinlich durch Überdeckung mit Gärungsnebenprodukten, verringert wird. Es ist daher erfindungsgemäß besonders vorteilhaft, solche obergärigen Hefen einzusetzen, bei denen die unerwünschten, das Aroma des Biers verändernden Gärungsnebenprodukte, besonders Phenole, Ester, höhere Alkohole etc., in möglichst geringem Ausmaß auftreten.

Die beim Kochen einer Würze auf Roggenbasis anfallenden Brüdenkondensate enthalten roggentypische Aromastoffe, die bei der üblichen Kondensatabtrennung verlorengehen. Im Rahmen der Erfindung kann dieser Aromaverlust in vorteilhafter Weise verhindert werden, wenn das beim Kochen der Würze anfallende Brüdenkondensat bzw. bestimmte Fraktionen davon, die aromawesentliche Komponenten enthalten, die beispielsweise organoleptisch erfaßt werden können, teilweise oder ganz wieder der Würze zugesetzt werden. Vorteilhaft ist es dabei, das Brüdenkondensat bzw. bestimmte Fraktionen, die der Würze wieder zugesetzt werden sollen, vor dem Hopfenzusatz abzunehmen, da hierdurch eine Aromaverbesserung erzielt werden kann. Der Zusatz des Brüdenkondensats bzw. von Fraktionen davon kann im Prinzip während oder nach dem Kochen der Würze vorgenommen werden, wobei der Zusatz nach dem Kochen günstiger erscheint.

Wenn andererseits das Kochen der Würze in einem abgeschlossenen System unter Druck durchgeführt wird, wobei also keine Brüdenkondensate anfallen, verbleiben die für Roggenaroma typischen Stoffe in der Würze.

Anstelle des Zusatzes von Hopfen beim Kochen der Würze kann auch isomerisierter Hopfenextrakt zugegeben werden, was vorzugsweise in der Abkühlphase oder nach dem Abkühlen der Würze geschieht. Auch diese Maßnahme wirkt sich im Sinne einer Aromaverbesserung bzw. Aromaerhaltung aus.

Eine Aromaintensivierung kann erfindungsgemäß dadurch erzielt werden, daß dem Bier nach der Hauptgärung und vor oder nach der Nachgärung karamelisierter Bierextrakt zugegeben wird, der unter Verwendung eines Malzes, das mindestens 10 und vorzugsweise mindestens 50 Masse-% Roggenmalz enthält, oder unter Verwendung einer Getreidemischung als Stärkequelle, die mindestens 10 und vorzugsweise mindestens 50 Masse-% Roggen enthält, erhalten ist. Dieser karamelisierte Bierextrakt kann vorteilhaft durch Aufsprühen eines entsprechenden Biers auf eine erwärmte Fläche erhalten werden.

Auf diese Weise wird ein Roggen- bzw. Brotgeschmack erreicht bzw. verstärkt.

Zusätzlich oder alternativ zu dieser Maßnahme kann das Roggenaroma auch dadurch erzeugt bzw. intensiviert werden, daß man dem Bier nach der Hauptgärung oder der Nachgärung und vor der Filtration Roggenmalzpulver und/oder Roggenmalzbrotfladen zugibt. Dabei ist lediglich erforderlich, die Roggenmalzbrotfladen vor der Filtration zuzusetzen, da dann die festen Bestandteile bei der anschließenden Filtration wieder mit entfernt werden. Ebenso kann auch Roggenmalzpulver zugesetzt werden.

Derartige Roggenmalzbrotfladen können in einfacher Weise durch Mischen von Roggenmalzschrot mit Wasser und Bierhefe, anschließendes Gehen und Quellenlassen und Backen hergestellt werden, vorzugsweise bei einer Backzeit von 30 bis 60 min und einer Backtemperatur von etwa 180 bis 250 °C und vorzugsweise etwa 220 °C.

Gemäß einer Weiterbildung der Erfindung ist vorgesehen, daß zur Nachgärung unvergorene Bierwürze ('Speise') aus einem anderen Sud, z.B. aus Weizen- und/oder Gerstenmalz,zugegeben wird.

Bei einer Zugabe von Roggenbierspeise hat sich herausgestellt, daß keine ausreichende Schaumhaltbarkeit resultiert. Als eine der Hauptursachen wurde diesbezüglich festgestellt, daß dies im wesentlichen am Vorhandensein von deutlich mehr höheren Fettsäuren liegt. Dieses Problem kann jedoch, wie überraschenderweise festgestellt wurde, durch die Verwendung von Weizenbierspeise, oder Speise aus Gerstenmalz anstelle von Roggenbierspeise leicht vermieden werden.

In gleicher Weise kann die Schaumhaltbarkeit auch dadurch deutlich verbessert werden, daß das Bier vor und/oder nach der Hauptgärung filtriert und/oder zentrifugiert wird. Wird das erfindungsgemäß hergestellte Bier filtriert, ist die Schaumhaltbarkeit erheblich verbessert. Bei Nachgärung im Tank kann die Filtration bzw. Zentrifugierung auch nach der Nachgärung erfolgen.

Die Filtration wird vorteilhaft mit Kieselgur vorgenommen.

Von Vorteil ist es auch, wenn man das Bier vor der Nachgärung und gegebenenfalls auch vor der Abfüllung noch einer Kurzzeiterhitzung unterzieht, die vorteilhaft durch ca. 0,5 bis 2 min langes Erhitzen auf Temperaturen von ca. 65 bis 75 °C vorgenommen wird. Auf diese Weise werden Proteasen zerstört. Es wurde nämlich festgestellt, daß bei Vorhandensein von Proteasen bei der Lagerung die Schaumbildung verringert ist. Inaktiviert man die Proteasen mit Hitze, wird konstante Schaumbildung erhalten.

Abschließend wird zur Nachgärung in der Flasche oder im Tank nochmals Hefe zugegeben.

Eine Intensivierung des Roggenaromas kann im Rahmen der Erfindung ferner auch dadurch erzielt werden, daß dem Malz bzw. der eingesetzten ungemalzten Stärkequelle Aminosäuren und ggf. auch Zucker zugesetzt werden. Hierdurch werden die Maillard-Reaktionen, die neben Amadori- und Heyns-Umlagerungen sowie dem Strecker-Abbau für die Aromabildung wesentlich sind, gefördert, wobei durch Auswahl der Aminosäuren und Zucker bestimmte Aromen bevorzugt erzeugt werden können, vorzugsweise aus der Pyrazinreihe, die für Roggenbrotaroma typisch sind.

In gleicher Weise wirkt sich auch ein Zusatz bestimmter Pyrazine zur Würze oder zum fertigen Bier aus, vorteilhaft von 2-Acetylpyrazin.

Eine weitere Maßnahme zur Aromaerzeugung, Aromaverbesserung bzw. -intensivierung besteht darin, dem Bier nach der Vergärung und vor oder nach der Nachgärung ungekochte Würze ("Pfan nevollwürze") auf Roggenbasis oder einen entsprechenden Würzeextrakt oder ein entsprechendes Würzekonzentrat, vorzugsweise in einer Menge von bis zu 12 g/l Bier, bezogen auf die Würze-Trockensubstanz, zuzusetzen. Dieser Zusatz erfolgt vorteilhaft unter Verwendung gefriergetrockneter Würze, vorzugsweise gelöst im Bier.

Das erfindungsgemäße Bier ist nach den oben erläuterten Verfahren erhältlich und zeichnet sich durch mehr oder weniger stark ausgeprägtes Roggenaroma aus, dessen spezifische Art und Intensität durch die oben erläuterten Verfahrensmaßnahmen bzw. Auswahl von Zusätzen in breitem Maße beeinflußt werden können.

Nachfolgend wird das erfindungsgemäße Verfahren anhand eines Ausführungsbeispiels näher erläutert.

In seinem prinzipiellen Ablauf entspricht das erfindungsgemäße Verfahren zur Herstellung von Bier unter Verwendung von Roggen der bekannten Verfahrensweise, weshalb im folgenden nur die für die Erfindung wesentlichen Abweichungen und Ergänzungen des üblichen Verfahrens näher beschrieben werden.

### Beispiel

### (A) Herstellung von Roggenmalz:

Es wird Roggen einer Korngröße über 2,5 mm eingesetzt. Die Einquellung erfolgt in einem Weichbehälter mit Wasser von 12 °C; zunächst wird eine Naßweiche von 4 h durchgeführt, der sich eine Trockenweiche von 10 h anschließt, auf die wiederum eine Naßweiche von 4 h folgt. Die Weicharbeit dauert entsprechend 18 h. Da die schlanken Roggenkörner in üblichen Weichen nur schlecht rutschen, sind Weichgefäße mit einem steileren Konus vorteilhaft. Zur Förderung wird vergleichsweise viel Wasser benötigt.

Während der Naßweiche wird pro Stunde 10 min mit Druckluft belüftet; bei der Trockenweiche wird CO₂ abgesaugt.

Bei der darauf folgenden, 6 d dauernden Keimung des Roggens, der einen anfänglichen Wassergehalt von 43 Masse-% aufweist, wird zunächst auf eine Temperatur von etwa 13 °C eingestellt. Während der Keimung wird die Temperatur mit einer Rate von etwa 1 °C/d fortschreitend auf 19 °C angehoben, während der Wassergehalt des Keimguts gleichzeitig von 43 auf 40 Masse-% verringert wird. Zum weiteren Aufschluß des Korns kann das Keimgut vorteilhaft 1 d auf etwa 40 °C gehalten werden.

Beim anschließenden Darren wird das erhaltene Roggen-Grünmalz zunächst innerhalb von 8 h von 45 °C auf 55 bis 60 °C erwärmt und so lange in diesem Temperaturbereich gehalten, bis der Durchbruch erfolgt. Darauf wird im Verlauf von 3 h auf 80 °C erwärmt und 5 h auf 80 bis 85 °C gehalten.

Zur Erzielung eines aromafördernden Überlöseffekts unter gleichzeitigem Aminosäureabbau ist es günstig, vor dem eigentlichen Darren das Malz auf der Darre etwa 4 h bei etwa 40 °C nur mit Umluft ohne Frischluftzufuhr zu behandeln, d.h. ohne Trocknen; durch diesen vorgeschalteten Schritt findet die angestrebte Überlösung statt.

Zur weiteren Aromaentwicklung ist es ferner günstig, nach dem Darren bei 80 °C die Temperatur des Malzes auf 120 bis 150 °C zu erhöhen und einige Stunden in diesem Temperaturbereich zu halten, wodurch neben einer Farbintensivierung eine Aromaverstärkung bei der Würze bzw. im fertigen Bier erzielt wird.

### (B) Würzeherstellung:

Zur Würzeherstellung kann sowohl ausschließlich von Roggenmalz, das beispielsweise wie oben unter (A) beschrieben hergestellt ist, als auch von einer Malzmischung aus Roggenmalz, Weizenmalz und/oder Gerstenmalz ausgegangen werden, wobei eine günstig geeignete Malzmischung beispielsweise aus 50 Masse-% Roggenmalz, 10 Masse-% Weizenmalz und 40 Masse-% Gerstenmalz besteht.

Alternativ kann anstelle der Verwendung entsprechender Malze auch von einer stärkehaltigen Ausgangssubstanz ausgegangen werden, die insbesondere aus einem wäßrigen Gemisch aus geschrotetem oder gemahlenem, ungemalztem Getreide und zugesetzten Hydrolasen und Proteasen besteht.

Das geputzte und geschrotete Malz bzw. die alternativ einsetzbare stärkehaltige Ausgangssubstanz wird im Maischschritt mit Wasser bei 35 °C eingemaischt.

Die Gesamtmaische wird dabei für etwa 15 min auf dieser Temperatur gehalten, wonach eine erste Teilmaische abgezogen und erwärmt wird, während die verbleibende erste Hauptmaische auf dieser Temperatur verbleibt. Während der Erwärmung der ersten Teilmaische auf Kochtemperatur wird bei ca. 50 °C und bei ca. 70 °C jeweils eine Temperaturrast unter Aufrechterhaltung einer konstanten Temperatur für jeweils 10 min vorgenommen.

Nach etwa 20 min Kochen der ersten Teilmaische wird diese mit der ersten Hauptmaische wieder vermischt, wobei sich eine Gemischtemperatur von etwa 47 °C einstellt. In kleinen Stufen wird anschließend die Gesamtmaische bis auf etwa 53 °C leicht erwärmt, wonach eine zweite Teilmaische zur erneuten Kochung abgezogen wird, während die verbleibende zweite Hauptmaische für etwa 30 min weiterhin auf der Temperatur von 53 °C gehalten und anschließend auf 60 bis 65 °C erwärmt wird.

Während der Erwärmung der zweiten Teilmaische auf Kochtemperatur wird bei 70 °C nochmals eine Temperaturrast von etwa 10 min durchgeführt. Nach der zweiten Kochung, die ebenfalls 20 min dauern kann, erfolgt wiederum eine Vereinigung mit der zweiten Hauptmaische, die zuvor auf 62 °C erwärmt und für etwa 30 min auf dieser erhöhten Temperatur gehalten worden ist. Die Vermischung der zweiten Teilmaische mit der zweiten Hauptmaische ergibt eine Gemischtemperatur von 74 °C. Anschließend wird die Gesamtmaische einer Läuterung unterzogen. Die Läuterung wird in einem Läuterbottich durchgeführt, wobei die Treber als Sieb wirken. Die Trennung der flüssigen von der festen Phase kann auch durch Filtrieren, z.B. mit einem Maischefilter oder einem Drehfilter, oder durch Zentrifugieren erfolgen.

Die dabei erhaltene Würze wird dann in Würzepfannen etwa 60 min gekocht und mit Hopfen versetzt.

### (C) Vergärung, Aromatisierung und Weiterverarbeitung:

Die abgekühlte Würze wird anschließend unter Zusatz von obergäriger Hefe zur Gärung bei etwa 15 bis 22 °C in Gärbottiche gebracht.

Nach dieser Hauptgärung wird das Bier aromatisiert. Dazu kann dem Bier etwa 15 bis 20 Masse-% unvergorene Bierwürze aus einem anderen Biersud, wie oben erläutert, zugegeben werden.

Zur Steigerung des Roggengeschmacks können auch Brotfladen aus Roggenmalz zugegeben werden. Zur Herstellung der Brotfladen werden ein Masseteil Roggenmalzschrot und ein Masseteil Wasser mit 1 bis 2 Masse-% Bierhefe gemischt. Den erhaltenen Teig läßt man etwa 1 h quellen, streicht ihn anschließend auf einem Backblech aus und läßt ihn nochmals für etwa 30 min gehen. Anschließend wird der Teig etwa 1 h bei 220 °C gebacken, wonach die auf diese Weise hergestellten Roggenmalzbrotfladen wie oben angegeben in das Bier eingebracht werden und damit einen würzigen, brotartigen Geschmack ergeben.

Die Dauer des Backvorganges für die Roggenmalzbrotfladen kann frei gewählt werden und richtet sich nach dem Verzuckerungsgrad, den man durch das Backen erreichen möchte.

Unabhängig von einer Zugabe von Roggenmalzbrotfladen kann auch karamelisierter Roggenbierextrakt zugegeben werden, um den gleichen Effekt zu erzielen.

Nach einer ggfs. möglichen Zugabe von unvergorener Bierwürze aus Weizen- und/oder Gerstenmalz und der Roggenmalzbrotfladen erfolgt eine Filtration des Bieres mit Kieselgur; danach wird das Bier einer Kurzzeiterhitzung aur etwa 65 bis 75 °C für etwa 0,5 bis 2 min zur Inaktivierung der Proteasen unterworfen. Abschließend erfolgt in üblicher Weise eine Nachgärung unter erneuter Zugabe von Hefe, insbesondere obergäriger Hefe, für etwa 2 bis 3 Wochen, wonach das Bier, bevorzugt mit der Hefe, abgefüllt wird. Die Nachgärung kann alternativ auch in der Flasche erfolgen.

Dem erfindungsgemäßen Bier können ferner auch schaumbildende Mittel bzw. Schaumstabilisatoren auf natürlicher oder halbsynthetischer Basis zugegeben werden, die dem Fachmann geläufig sind.

Zusammengefaßt beruht die vorliegende Erfindungskonzeption darauf, daß Verfahren angegeben werden, mit denen neuartige untergärige und obergärige Biere mit roggenbrotartigem Geruch und Geschmack und zugleich guter Schaumbildung und Schaumstabilität erhältlich sind.

## Patentansprüche

1. Verfahren zur Herstellung von Bier mit Roggenaroma bzw. Roggenbrotaroma durch Herstellung einer Würze durch Maischen einer zerkleinerten Stärkequelle und Vergärung der Würze unter Zusatz von Hefe,
gekennzeichnet durch
Aromatisierung des erhaltenen Biers nach der Hauptgärung mit Roggenaroma bzw. Roggenbrotaroma.

2. Verfahren nach Anspruch 1 gekennzeichnet durch
(a) ausschließliche Verwendung von Roggenmalz oder einer Malzmischung, die mindestens 10 Masse-% und vorzugsweise mindestens 50 Masse-% Roggenmalz enthält, wobei der, Rest aus einem oder mehreren Malzen aus anderen Getreidearten besteht, als Stärkequelle
oder
(b) ausschließliche Verwendung von ungemälztem Roggen als Stärkequelle
oder
(c) ausschließliche Verwendung einer ungemälzten Getreidemischung, die mindestens 10 Masse-% und vorzugsweise mindestens 50 Masse-% Roggen enthält, wobei der Rest aus einer oder mehreren anderen Getreidearten besteht, als Stärkequelle
oder
(d) ausschließliche Verwendung eines von Roggen verschiedenen ungemälzten Getreides oder einer roggenfreien ungemälzten Getreidemischung als Stärkequelle
oder
(e) einer nicht auf einem Getreide beruhenden Stärkequelle.

3. Verfahren nach Anspruch 1 oder 2, gekennzeichnet durch Aromatisierung des Biers mit
- Roggenmalzpulver,
- Roggenmalzbrotfladen,
- ungekochter Roggenwürze,
- Roggenwürzeextrakt,
- Roggenwürzekonzentrat,
- dem beim Kochen einer Würze auf Roggenbasis anfallenden Brüdenkondensat oder Fraktionen davon,
- karamelisiertem Bierextrakt, der unter Verwendung von ausschließlich Roggenmalz oder einer Malzmischung, die mindestens 10 und vorzugsweise mindestens 50 Masse-% Roggenmalz enthält, oder unter Verwendung einer Getreidemischung, die mindestens 10 und vorzugsweise mindestens 50 Masse-% Roggen enthält, als Stärkequelle erhalten ist, und/oder
- Pyrazinen, insbesondere 2-Acetylpyrazin.

4. Verfahren nach einem der Ansprüche 1 bis 3, gekennzeichnet durch Aromatisierung mit ungekochter Würze, Würzeextrakt oder Würzekonzentrat auf Roggenbasis in einer Menge bis zu 12 g/l Bier, bezogen auf die Würze-Trockensubstanz.

5. Verfahren nach einem der Ansprüche 1, 2(a), 3 und 4, dadurch gekennzeichnet, daß das eingesetzte Roggenmalz hergestellt wird durch
- Weichen von Roggen bei etwa 12 °C,
- Keimung des Roggens unter
- Einstellung eines Wassergehalts des Keimguts von etwa 43 bis 45 Masse-% und einer Temperatur von 16 ± 3 °C
und
- Verringerung des Wassergehalts während der Keimung auf ≦ 40 Masse-%, vorzugsweise mit einer Rate von 0,5 bis 1 Masse-%/d,
und
- Steigerung der Temperatur während der Keimung auf 22 ± 3 °C, vorzugsweise mit einer Rate von 0,5 bis 2 °C/d,
sowie
- Darren des erhaltenen Roggen-Grünmalzes.

6. Verfahren nach Anspruch 5, dadurch gekennzeichnet, daß nach Beendigung der Keimung und vor dem Darren die Temperatur des Roggen-Grünmalzes auf etwa 40 °C erhöht und einige Stunden bis maximal 1 Tag auf diesem Wert gehalten
und/oder
das Roggen-Grünmalz zu Beginn des Darrens zunächst einige Stunden ohne Trocknung auf einer Temperatur von 40 ± 5 °C gehalten
und/oder
die Temperatur beim Darren auf eine Abdarrtemperatur von 105 bis 150 °C gesteigert wird, die einige Stunden aufrechterhalten wird.

7. Verfahren nach einem der Ansprüche 1, 2(b)-2(e), 3 und 4, dadurch gekennzeichnet, daß die ungemälzte Stärkequelle, die Proteine und Proteasen und/oder zugesetzte Aminosäuren enthält, bzw. nur der Roggenanteil davon mit den zugesetzten hydrolytischen und proteolytischen Enzymen vor dem Maischen einer Wärmebehandlung bei 40 bis 50 °C und gegebenenfalls anschließend bei 105 bis 150 °C während einiger Stunden unterzogen wird.

8. Verfahren nach einem der Ansprüche 1 bis 7, unter Herstellung einer Würze durch Maischen eines Malzes oder einer zerkleinerten, ungemälzten Stärkequelle mit hydrolytischen und proteolytischen Enzymen mit Wasser, Trennen und Kochen der gewonnenen Würze,
gekennzeichnet durch Maischen nach folgendem Zweimaischverfahren:
- Einmaischen bei einer Temperatur im Bereich von 30 bis 40 °C,
- Halten der Maische auf dieser Temperatur,
- Abziehen der 1. Teilmaische bei dieser Temperatur,
- Halten der 1. Hauptmaische auf dieser Temperatur,
- Zumischen der 1. Teilmaische nach dem Kochen zur 1. Hauptmaische unter Erzielung einer Temperatur der Gesamtmaische von 50 bis 55 °C,
- Abziehen der 2. Teilmaische,
- Halten der 2. Hauptmaische auf dieser Temperatur für 20 bis 40 min,
- Erwärmen der 2. Hauptmaische auf eine Temperatur im Bereich von 60 bis 65 °C und Halten auf dieser Temperatur für 20 bis 40 min
sowie
- Zumischen der 2. Teilmaische nach dem Kochen zur 2. Hauptmaische unter Erzielung einer Temperatur der Gesamtmaische von 70 bis 80 °C.

9. Verfahren nach einem der Ansprüche 1 bis 8, dadurch gekennzeichnet, daß die Vergärung der Würze mit einer obergärigen Hefe und/oder einer untergärigen Hefe durchgeführt wird.

10. Verfahren nach Anspruch 9, dadurch gekennzeichnet, daß die Vergärung der Würze zuerst mit einer obergärigen Hefe und anschließend mit einer untergärigen Hefe oder zuerst mit einer untergärigen Hefe und anschließend mit einer obergärigen Hefe durchgeführt wird.

11. Verfahren nach einem der Ansprüche 7 bis 10, dadurch gekennzeichnet, daß eine Stärkequelle verwendet wird, die neben Proteinen und Proteasen und/oder Aminosäuren mit Zuckern angereichert ist.

12. Verfahren nach einem der Ansprüche 1 bis 11, dadurch gekennzeichnet, daß das Bier vor und/oder nach der Hauptgärung filtriert und/oder zentrifugiert wird.

## Claims

1. Method for producing beer having rye flavor or rye-bread flavor, respectively, by preparing a wort by mashing a crushed starch source and fermenting the wort with addition of yeast,
characterized by
flavoring the obtained beer after the main fermentation with rye flavor or rye-bread flavor, respectively.

2. Method according to claim 1,
characterized by
(a) exclusive use of rye malt or a malt mixture comprising at least 10 % by mass and preferably at least 50 % by mass of rye malt, the rest consisting of one or more malts of other cereals, as starch source,
or
(b) exclusive use of non-malted rye as starch source, or
(c) exclusive use of a non-malted cereal mixture comprising at least 10 % by mass and preferably at least 50 % by mass of rye, the rest consisting of one or more other cereals, as starch source,
or
(d) exclusive use of a non-malted cereal other than rye or of a rye-free non-malted cereal mixture as starch source,
or
(e) exclusive use of a non-cereal starch source.

3. Method according to claim 1 or 2,
characterized by flavoring the beer with
- rye malt powder,
- rye malt bread flat cakes,
- non-decocted rye wort,
- rye wort extract,
- rye wort concentrate,
- the waste steam condensate obtained from decoction of a wort on rye basis or fractions thereof,
- caramelized beer extract, obtained with use of exclusively rye malt or of a malt mixture containing at least 10 % by mass and preferably at least 50 % by mass of rye malt or with use of a cereal mixture containing at least 10 % by mass and preferably at least 50 % by mass of rye,
as starch source,
and/or
- pyrazines, particularly 2-acetylpyrazine.

4. Method according to one of claims 1 to 3, characterized by flavoring with undecocted wort, wort extract or wort concentrate on rye basis in an amount of up to 12 grammes per litre of beer, based on the wort dry substance.

5. Method according to one of claims 1, 2(a), 3 and 4, characterized in that the rye malt used is prepared, by
- soaking of rye at about 12 °C,
- germination of the rye with
- adjustment of a water content of the germinating material of about 43 to 45 % by mass and a temperature of 16 ± 3 °C,
- reduction of the water content during the germination to ≦ 40 % by mass, preferably at a rate of 0.5 to 1 % by mass per day,
and
- increase of the temperature during germination to 22 ± 3 °C, preferably at a rate of 0.5 to 2 °C per day,
and
- kiln-drying the obtained rye green malt.

6. Method according to claim 5, characterized in that after termination of the germination and before the kiln-drying the temperature of the rye green malt is increased to about 40 °C and is kept for several hours to at most 1 day at this value,
and/or
the rye green malt is kept at the beginning of the kiln-drying at the first instance for several hours at a temperature of 40 ± 5 °C without drying,
and/or
the temperature is increased during kiln-drying to a final drying temperature of 105 to 150 °C which is maintained for several hours.

7. Method according to one of claims 1, 2(b) - 2(e), 3 and 4, characterized in that the non-malted starch source which contains proteins and proteases and/or added amino acids, or only the rye portion thereof comprising the added hydrolytic and proteolytic enzymes is subjected before the malting to a heat treatment at 40 to 50 °C, optionally followed by a heat treatment at 105 to 150 °C for several hours.

8. Method according to one of claims 1 to 7, comprising the steps of preparing a wort by mashing a malt or a crushed, non-malted starch source comprising hydrolytic and proteolytic enzymes with water, separation and decoction of the obtained wort,
characterized by mashing according to the following two-mash process:
- mashing at a temperature within the range of 30 to 40 °C,
- keeping the mash at this temperature,
- taking off the first partial mash at this temperature,
- keeping the first main mash at this temperature,
- adding the first partial mash after decoction to the first main mash, thus achieving a temperature of the united mash of 50 to 55 °C,
- taking off the second partial mash,
- keeping the second partial mash at this temperature for 20 to 40 minutes,
- heating the second main mash at a temperature within the range of 60 to 65 °C, and keeping it at this temperature for 20 to 40 minutes,
and
- adding the second partial mash after decoction to the second main mash, thus achieving a temperature of the united mash of 70 to 80 °C.

9. Method according to one of claims 1 to 8, characterized in that the fermentation of the wort is carried out with use of a top-fermenting and/or a bottom-fermenting yeast.

10. Method according to claim 9, characterized in that the wort is fermented either at the first instance with a top-fermenting yeast and subsequently with a bottom-fermenting yeast, or at the first instance with a bottom-fermenting yeast and subsequently with a top-fermenting yeast.

11. Method according to one of claims 7 to 10,
characterized in that a starch source is used which, in addition to proteins and proteases and/or amino acids, is enriched with sugars.

12. Method according to one of claims 1 to 11,
characterized in that the beer is filtrated and/or centrifugated before and/or after the main fermentation.

## Revendications

1. Procédé de fabrication de bière ayant un arôme de seigle ou un arôme de pain de seigle, par préparation d'un moût par empâtage d'une source d'amidon moulue et par fermentation du moût avec addition de levure, caractérisé par l'aromatisation de la bière obtenue après la fermentation principale par un arôme de seigle ou pu un arôme de pain de seigle.

2. Procédé selon la revendication 1, caractérisé par
(a) l'utilisation exclusive, comme source d'amidon, de malt de seigle ou d'un mélange de malts qui contient au moins 10 % en masse et de préférence au moins 50 % en masse de malt de seigle, le reste étant composé par un ou plusieurs malts provenant d'autres espèces de céréales, ou
(b) l'utilisation exclusive, comme source d'amidon, de seigle non malté, ou
(c) l'utilisation exclusive, comme source d'amidon, d'un mélange de céréales non malté qui contient au moins 10 % en masse et de préférence au moins 50 % en masse de seigle, le reste étant composé par une ou plusieurs autres espèces de céréales, ou
(d) l'utilisation exclusive, comme source d'amidon, d'une céréale non maltée différente du seigle ou d'un mélange de céréales non malté exempt de seigle, ou
(e) une source d'amidon ne provenant pas d'une céréale.

3. Procédé selon la revendication 1 ou 2, caractérisé par l'aromatisation de la bière par
- une poudre de malt de seigle,
- une galette de pain de malt de seigle,
- un moût de seigle cru,
- un extrait de moût de seigle,
- un concentré de moût de seigle,
- le produit de condensation de buées se formant lors de la cuisson d'un moût à base de seigle ou des fractions de ce dernier,
- un extrait de bière caramélisé, obtenu comme source d'amidon par l'utilisation exclusive de malt de seigle ou d'un mélange de malts qui contient au moins 10 % et de préférence au moins 50 % en masse de malt de seigle, ou par l'utilisation d'un mélange de céréales qui contient au moins 10 % et de préférence au moins 50 % en masse de seigle, et/ou
- une pyrazine, en particulier la 2-acétylpyrazine.

4. Procédé selon l'une des revendications 1 à 3, caractérisé par l'aromatisation par un moût non cuit, un extrait de moût ou un concentré de moût à base de seigle en une quantité allant jusqu'à 12 g/l de bière par rapport à la substance sèche du moût.

5. Procédé selon l'une des revendications 1, 2(a), 3 et 4, caractérisé en ce qu'on fabrique le moût de seigle utilisé par
- trempage du seigle à environ 12°C.
- germination du seigle par
- ajustement de la teneur en eau de la matière de germination entre 43 et 45 % en masse et de la température à environ 16 ± 3°C, et
- diminution de la teneur en eau pendant la germination à une valeur inférieure ou égale à 40 % en masse, de préférence à une vitesse comprise entre 0,5 et 1 % en masse/j, et
- élévation de la température pendant la germination à 22 ± 3°C, de préférence à une vitesse comprise entre 0,5 et 2°C/j,
ainsi que
- touraillage du malt vert de seigle obtenu.

6. Procédé selon la revendication 5, caractérisé en ce qu'on élève la température du malt vert de seigle à environ 40°C après la fin de la germination et avant le touraillage et en ce qu'on la maintient à cette valeur de quelques heures à au maximum 1 j, et/ou
en ce qu'on maintient tout d'abord le malt vert de seigle au début du touraillage quelques heures sans séchage à une température de 40 ± 5°C, et/ou
en ce qu'on élève la température lors du touraillage à une température de touraillage comprise entre 105 et 150°C qu'on maintient quelques heures.

7. Procédé selon l'une des revendications 1, 2(b) à 2(e), 3 et 4, caractérisé en ce qu'on soumet pendant quelques heures la source d'amidon non maltée, qui contient des protéines et des protéases et/ou des acides aminés ajoutés, ou selon le cas uniquement la partie seigle et les enzymes hydrolytiques et protéolytiques ajoutées, avant la trempe à un traitement thermique entre 40 et 50°C et ensuite le cas échéant entre 105 et 150°C.

8. Procédé selon l'une des revendications 1 à 7, avec préparation d'un moût par empâtage d'un malt ou d'une source d'amidon non malté moulue et d'enzymes hydrolytiques et protéolytiques à l'aide d'eau, par séparation et cuission du moût obtenu, caractérisé pu un empâtage selon le procédé à deux maisches suivant :
- empâtage à une température comprise entre 30 et 40°C,
- maintien de la maische à cette température,
- soutirage de la première sous-maische à cette température,
- maintien de la première maische principale à cette température,
- addition de la première sous-maische après cuisson à la première maische principale avec obtention d'une température de la maische entière comprise entre 50 et 55°C,
- soutirage de la deuxième sous-maische,
- maintien de la deuxième maische principale à cette température pendant 20 à 40 min,
- réchauffement de la deuxième maische principale à une température comprise entre 60 et 65°C et maintien à cette température pendant 20 à 40 min, ainsi que
- addition de la deuxième sous-maische après cuisson à la deuxième maische principale avec obtention d'une température de la maische entière comprise entre 70 et 80°C.

9. Procédé selon l'une des revendications 1 à 8, caractérisé en ce qu'on réalise la fermentation du moût avec une levure de fermentation haute et/ou une levure de fermentation basse.

10. Procédé selon la revendication 9, caractérisé en ce qu'on réalise la fermentation du moût tout d'abord avec une levure de fermentation haute et ensuite avec une levure de fermentation basse, ou tout d'abord avec une levure de fermentation basse et ensuite avec une levure de fermentation haute.

11. Procédé selon l'une des revendications 7 à 10, caractérisé en ce qu'on utilise une source d'amidon qui est enrichie en sucre en plus des protéines et des protéases et/ou des acides aminés.

12. Procédé selon l'une des revendications 1 à 11, caractérisé en ce qu'on filtre et/ou qu'on centrifuge la bière avant et/ou après la fermentation principale.
